# EUROPEAN PATENT APPLICATION

(11) **EP 4 164 046 A1**
(43) Date of publication of application: **12.04.2023**
(21) Application number: 22739032.5
(22) Date of filing: 12.01.2022
(51) Int. Cl.: H01M 50/507, H01M 50/296

(54) **PRISMATIC LONG BATTERY PACK, BATTERY MODULE, AND ELECTRIC VEHICLE**

(30) Priority: 14.01.2021 CN 202120107513 U
(71) Applicant: SVOLT ENERGY TECHNOLOGY CO., LTD, Changzhou, Jiangsu 213200 (CN)
(72) Inventor: QU, Fanduo, hangzhou, Jiangsu 213200 (CN)
(74) Representative: Barker Brettell LLP
(86) International application number: PCT/CN2022/071555
(87) International publication number: WO 2022/152154

(57) **Abstract**

A prismatic long battery pack, a battery module, and an electric vehicle. The prismatic long battery pack comprises a plurality of batteries (1) that are stacked together, and further comprises a plurality of busbars; the poles of each battery (1) are disposed at both ends, and the poles of the batteries (1) on the same side are arranged in alternation up and down in the stacking direction of the prismatic long battery pack; the busbars each comprise a positive lead-out bus (2) connected to one of the batteries (1), a negative lead-out bus (3) connected to another battery (1), and a plurality of series-connected rows that are disposed on both sides of the prismatic long battery pack to form series connection among the batteries (1). In the described prismatic long battery pack, the poles of the batteries (1) are disposed at both ends, and the poles of the batteries (1) on the same side are arranged in alternation up and down in the stacking direction of the prismatic long battery pack, thus operation is convenient, the space for arranging busbars can be increased, and busbar molding is facilitated..

## Description

The present disclosure claims priority of the patent application No. 202120107513.8 submitted to China National Intellectual Property Administration on January 14, 2021 and entitled "PRISMATIC LONG BATTERY PACK, BATTERY MODULE, AND ELECTRIC VEHICLE", the entire contents of which are incorporated herein by reference.

### TECHNICAL FIELD

The present disclosure relates to the technical field of power batteries, in particular to a prismatic long battery pack. Meanwhile, the present disclosure also relates to a battery module applying the prismatic long battery pack, and an electric vehicle mounted with the battery module.

### BACKGROUND

In recent years, as the awareness of the energy saving and emission reduction in automobiles has gained in mind, the demands for electric vehicles have increased, and thus the demands for battery packs have increased substantially. Current battery packs, in order to improve energy storage, generally include a plurality of batteries stacked in sequence, wherein the batteries are connected in series or in parallel by busbars to meet different functional needs.

However, due to the influences of existing structures and connection modes, a battery pack is composed of stacked batteries, wherein positive and negative poles of the battery pack are separately arranged at two ends of the battery pack, and electrical connection is inconvenient; and besides, the busbars are arranged in a small space and are inconvenient to operate, leading to difficulties in the modeling of the busbars.

### SUMMARY

In view of this, an objective of the present disclosure is to provide a prismatic long battery pack to facilitate arrangement of busbars.

In order to achieve the above objective, the technical solution of the present disclosure is achieved as follows.

A prismatic long battery pack includes a plurality of batteries stacked together and a plurality of busbars; wherein
poles of each of the batteries are arranged at two ends, and the poles of each of the batteries on the same side are staggered up and down in a stacking direction of the prismatic long battery pack;
each of the busbars includes a positive lead-out bar connected to one of the batteries, a negative lead-out bar connected to another one of the batteries, and a plurality of series-connection bars that are respectively arranged at two sides of the prismatic long battery pack and form series connections among the batteries.

Further, the poles at the two ends of each of the batteries are located at a top or a bottom of the battery.

Further, the series-connection bars include bridge-joint bars, and each of the bridge-joint bars bridges over an end face of a middle battery to form a series connection between batteries on two sides of the middle battery.

Further, poles of two batteries series-connected by the bridge-joint bar are both located at a top or a bottom of the respective batteries.

Further, the batteries are stacked in an odd number, the positive lead-out bar and the negative lead-out bar are located at the same end of the prismatic long battery pack and are respectively arranged on the two sides of the prismatic long battery pack.

Further, the series-connection bars also include an adjoining bar for series connection of two adjacent batteries at an end part, and both the positive lead-out bar and the negative lead-out bar are located at one end of the prismatic long battery pack opposite to the adjoining bar.

Further, the batteries are stacked in an even number, and the positive lead-out bar and the negative lead-out bar are located at the same end and on the same side of prismatic long battery pack

Further, the series-connection bars also include an adjoining bar for series connection of two adjacent batteries (1) at an end part, and both the positive lead-out bar and the negative lead-out bar are located at one end of the prismatic long battery pack opposite to the adjoining bar.

Further, each of the batteries has a length of 350mm-1500mm, a width of 140mm-250mm, and a thickness of 17mm-75mm.

Further, deformable energy-absorbing structures are constructed on at least part of the series-connection bars.

Further, the deformable energy-absorbing structures are bendable portions constructed on the series-connection bars.

Further, at least two bendable portions are constructed on each of the series-connection bars.

Compared with the prior art, the present disclosure has the following advantages:

The prismatic long battery pack is convenient to operate, has enlarged placement space for the busbars, facilitates modeling of the busbars, and possesses good practicability by arranging the poles of each of the batteries (1) at two ends, and staggering the poles of each of the batteries (1) on the same side up and down in the stacking direction of the prismatic long battery pack.

In addition, the poles at both ends of the battery are at the top or bottom of the battery to facilitate bus bar connections. The cross over the end surfaces of the batteries in the middle allows for increased space to be arranged to facilitate the shaping of the cross over, e.g., deformation energy absorbing structures may be provided to improve the reliability of the connection of the cross over bars to the poles.

In addition, the batteries being stacked in the singular may be advantageous to have the positive and negative lead out bars arranged close to the same end of the long set of square case batteries to facilitate electrical connection.

Another object of the present disclosure is to propose a battery module comprising a set of long square case batteries as described above, wherein the set of long square case batteries is one or a plurality of long square case batteries connected in series.

Meanwhile, the present disclosure also provides an electric vehicle in which a battery module as described above is mounted on a body of the electric vehicle.

The battery module and electric vehicle described in the present disclosure have the same benefits as the square-case long battery set described above with respect to the prior art, and will not be described in detail herein.

### BRIEF DESCRIPTION OF THE DRAWINGS

The drawings, which form a part of the present disclosure, are used to provide a further understanding of the present disclosure, and illustrative embodiments of the present disclosure and descriptions thereof are provided to explain the present disclosure and do not constitute undue limitations of the present disclosure. In the drawings:
FIG. 1 is a schematic structural diagram of a prismatic long battery pack in Embodiment 1 of the present disclosure;
FIG. 2 is a top view of FIG. 1;
FIG. 3 is a bottom view of FIG. 1;
FIG. 4 is another schematic structural diagram of the prismatic long battery pack in Embodiment 1 of the present disclosure; FIG. 5 is a schematic structural diagram of a busbar in Embodiment 1 of the present disclosure; and
FIG. 6 is a schematic structural diagram of a battery module in Embodiment 2 of the present disclosure.

Description of Reference Numerals:
1. Battery; 2. Positive lead-out bar; 3. Negative lead-out bar; 4. Bridge-joint bar; 5. Adjoining bar;
101. Positive pole; 102. Negative pole;
401. Deformable energy-absorbing structure.

### DETAILED DESCRIPTION

It should be noted that embodiments and features of the embodiments of the present disclosure may be combined with each other without conflict.

In the description of the present disclosure, the terms "mount", "join", "connection" and "connector" should be broadly understood unless explicitly defined otherwise. For example, it may be a fixed connection, a detachable connection, or an integral connection; it may be a mechanical connection or an electrical connection; it may also be a direct connection, or an indirect connection through an intermediate medium, and it may be internal communication between two elements. To those of ordinary skill in the art, specific meanings of the above terms in the present disclosure can be understood in connection with specific circumstances.

Further, for convenience of description, the following positive pole and negative pole are collectively referred to as poles; for convenience of understanding, the positive pole is represented by a solid line and the negative pole is represented by a dashed line.

The present disclosure will be explained in detail below in combination with embodiments with reference to the drawings.

### Embodiment 1

The embodiment relates to a prismatic long battery pack, including a plurality of busbars and a plurality of batteries stacked together, wherein a positive pole and a negative pole are respectively arranged at two ends of each of the batteries, positive poles and negative poles of different batteries are connected via the busbars so that the plurality of batteries can be connected together in series.

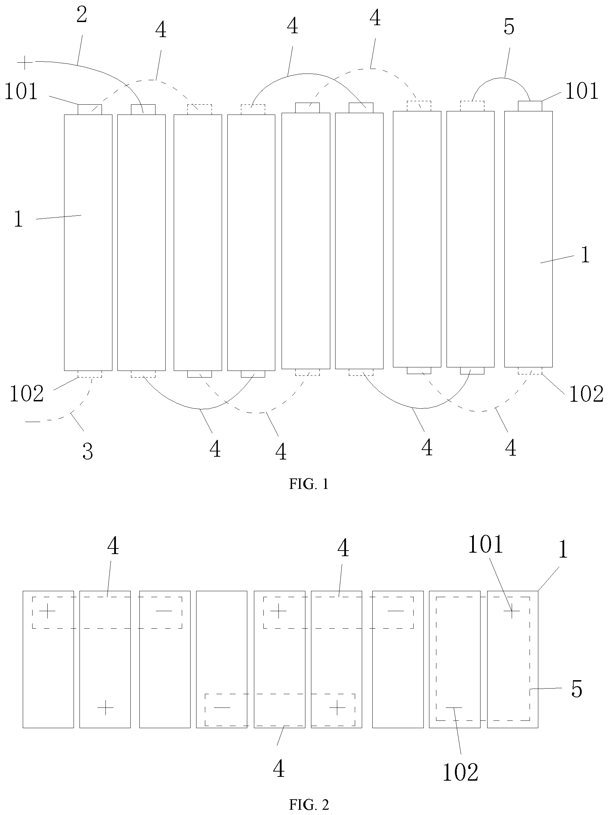

Based on the description of the overall structure described above, an exemplary structure of the prismatic long battery pack in the embodiment is shown in FIG. 1 to FIG. 3, and the prismatic long battery pack includes a plurality of batteries 1 stacked, and preferably has a length of 350mm-1500mm, a width of 140mm-250mm, and a thickness of 17mm-75mm.

A positive pole 101 and a negative pole 102 of each of batteries 1 are arranged at two ends itself, and arranged on two opposite sides close to itself, and the poles of each of the batteries 1 on the same side are staggered up and down in a stacking direction of the prismatic long battery pack.

It should be noted here that in a preferred arrangement manner, the poles at the two ends of each of the batteries 1 are located at a top or a bottom of the battery 1 to facilitate series connections among the batteries 1.

In order to facilitate the series connection among the batteries 1, each of the busbars in the embodiment, based on divisions by functions, mainly includes a positive lead-out bar 2, a negative lead-out bar 3 and a plurality of series-connection bars.

Specifically, still referring to the structure as shown in FIG. 1 to FIG. 3, the positive lead-out bar 2 and the negative lead-out bar 3 are located at the same end of the prismatic long battery pack and are separately arranged on the two sides of the prismatic long battery pack; and the positive lead-out bar 2 is connected to a positive pole 101 of one of the batteries 1, and the negative lead-out bar 3 is connected to a negative pole 102 of another one of the batteries 1 to facilitate series connections among the batteries.

There are a plurality of series-connection bars, in a preferred embodiment, each of the series-connection bars includes a bridge-joint bar 4 and an adjoining bar 5, and the series-connection bars are respectively arranged on the two sides of the prismatic long batter pack so as to cooperate with the positive lead-out bars 2 and the negative lead-out bars 3 to connect the batteries 1 together in series.

In detail, still referring to the structure as shown in FIG. 1 to FIG. 3, each of the bridge-joint bars 4 bridges over an end face of a middle battery (1) to form a series connection between batteries (1) on two sides of the middle battery (1). In the embodiment, the number of the middle battery 1 is one, and poles of two batteries 1 series-connected by the bridge-over bar 4 are both located at a top or a bottom of the respective batteries 1. In this structure, the number of the middle battery 1 is one to facilitate the series connections of the batteries 1. Besides, the middle battery 1 may be provided in other numbers, such as two, three or more.

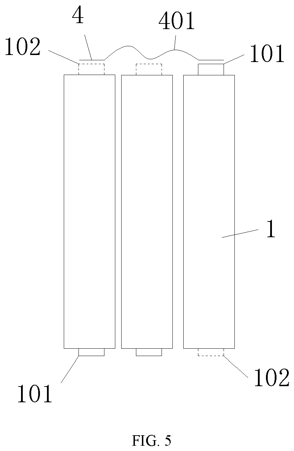

In order to improve the reliability of the connection of the bridge-joint bars 4 and the poles, referring to the structure as shown in FIG. 5, deformable energy-absorbing structures 401 are constructed on the respective bridge-joint bars 4, and the deformable energy-absorbing structures 401 are specifically bendable portions constructed on the series-connection bars. In a preferred possible embodiment, two bendable portions are constructed on each of the bridge-joint bars 4 for facilitating arrangement and having better deformable energy-absorbing effect. Besides, the number of the bendable portions can of course be one or more. Only one bendable portion is present, resulting in relatively poor energy absorption effect; and more bendable portions are present, resulting in relatively difficult processing and forming of the bridge-joint bars 4.

It should be understood here that the deformable energy-absorbing structures 401 in the embodiments may be arranged on the busbars besides the bridge-joint bars 4. However, due to the influence of the space factor, the arrangement of the deformable energy-absorbing structures 401 may not be convenient, for example, the adjoining bars 5 described below is not suitable for the arrangement of the deformable energy-absorbing structure 41 due to the need of the series connection of the poles of the two adjacent batteries 1 and the smaller space between the two batteries 1.

Besides, referring to the structure as shown in FIG. 2, the series-connection bars also include an adjoining bar 5. In the embodiment, the adjoining bar 5 is used for series connection of two adjacent batteries (1) at an end part, and both the positive lead-out bar (2) and the negative lead-out bar (3) are located at one end of the prismatic long battery pack opposite to the adjoining bar (5), facilitating the implementation of the series connections among the batteries 1.

In the prismatic long battery pack in the embodiment, the batteries 1 may be stacked in an odd number, to facilitate the arrangement of the busbars and to facilitate the arrangement of the positive lead-out bar 2 and the negative lead-out bar 3 on two sides of the same end of the prismatic long battery pack, thereby facilitating electrical connection.

More specifically, in a preferred embodiment, referring to the structure as shown in FIG. 2, four batteries 1 are arranged as a unit with the exception of the rightmost battery 1 in an arrangement direction of the batteries 1, i.e., from left to right, in a cycle. In each unit, the left two batteries 1 are respectively provided with a positive pole 101 and a negative pole 102 on the same side, and the right two batteries 1 are also respectively provided with a positive pole 101 and a negative pole 102 on the same side. The positive poles 101 and the negative poles 102 of the left two batteries 1 and right two batteries 1 on the same side are arranged one above the other, and the poles of the respective batteries 1 on the same side are arranged one above the other in the stacking direction of the prismatic long battery pack, to facilitate the arrangement of the busbars and electrical connection.

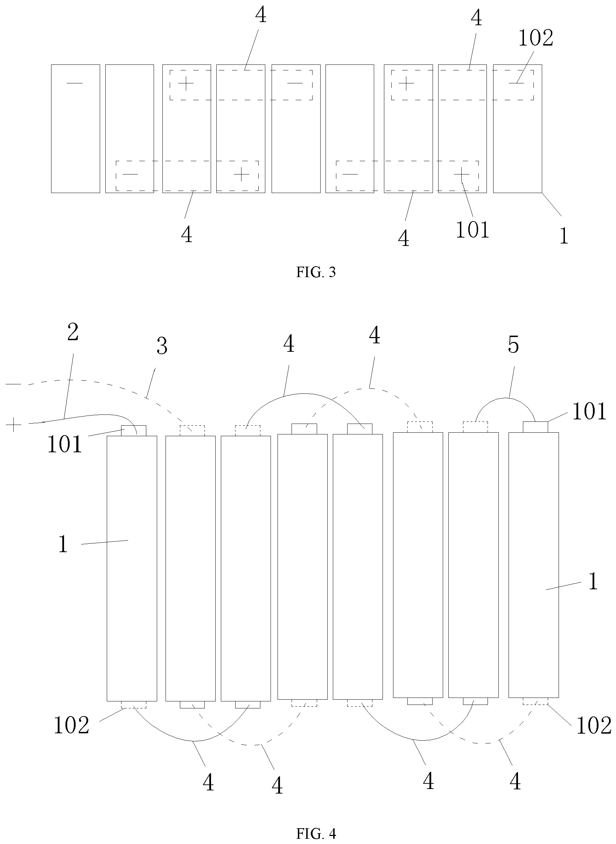

In addition, the batteries 1 may also be arranged in an even number, as shown in the structure in FIG. 4, in order to facilitate the arrangement of the busbars, the positive lead-out bar 2 and the negative lead-out bar 3 are arranged at the same end and on the same side of the prismatic long battery pack, to facilitate electrical connection.

More specifically, as a preferred embodiment, still referring to the structure as shown in FIG. 4, two batteries 1 are arranged as one unit with the exception of the leftmost and rightmost batteries 1 in the arrangement direction of the batteries 1, i.e., from left to right. In the same unit, positive poles 101 are arranged on the same side, negative poles 102 are arranged on the other side, the positive poles 101 and the negative poles 102 on the same side are arranged one above the other, and the positive poles 101 and the negative poles 102 in the adjacent units are located on the two sides of the prismatic long battery pack. The poles of the respective batteries 1 on the same side are staggered up and down in the stacking direction of the prismatic long battery pack, thereby facilitating the arrangement of the busbars and electrical connection.

In addition, the prismatic long battery pack in the embodiment is convenient to operate, may increase the arrangement space of the busbars, and facilitate the modeling of the busbars by means of the above structure setting. In addition, the arrangement mode of the batteries 1 facilitates the arrangement of the deformable energy-absorbing structures 401 on the bridge-joint bars 4 to facilitate the improvement of the reliability of the connection between the bridge-joint bars 4 and the poles, and facilitates electrical connection to have better practicability.

### Embodiment 2

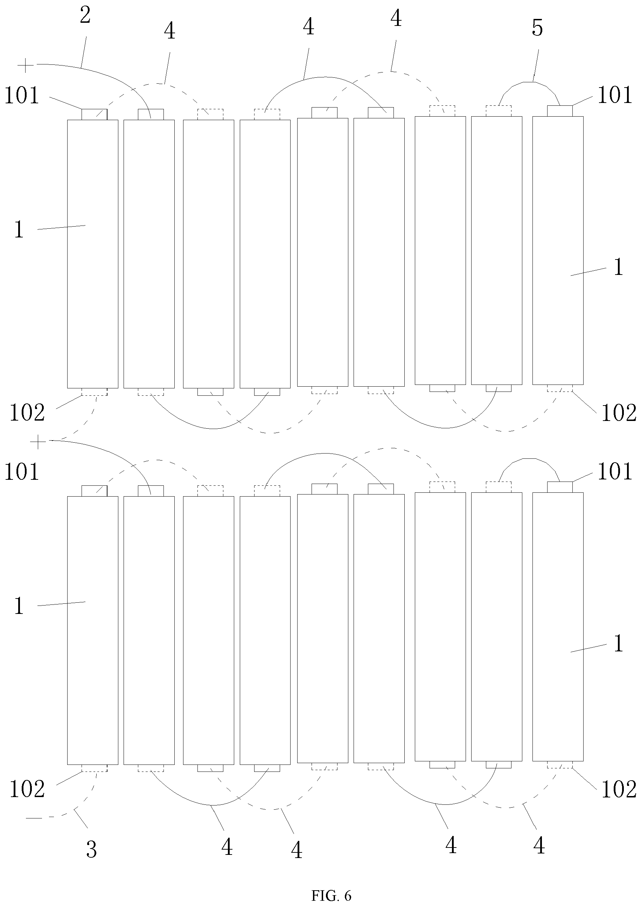

The embodiment relates to a battery module, the specific structure of which can refer to the structure as shown in FIG. 6. The battery module includes two prismatic long battery packs according to Embodiment 1, the positive lead-out bars 2 and the negative lead-out bars 3 of the two prismatic long battery packs are located at the same end of the battery module, and the two prismatic long battery packs are in series connection.

It should be understood here that in the battery module in the embodiment, the number of the prismatic long battery packs is not limited to two as shown in FIG. 6, and besides, the battery module may employ one prismatic long battery pack or a plurality of prismatic long battery packs in series connection.

The battery module in the embodiment, by applying the prismatic long battery pack in Embodiment 1, facilitates the arrangement of the busbars, thereby improving the reliability of the battery module; in addition, the positive lead-out bar 2 and the negative lead-out bar 3 are arranged at the same end of the prismatic long battery pack, to facilitate electrical connection, thereby having better practicability.

### Embodiment 3

The embodiment relates to an electric vehicle, wherein the battery module in Embodiment 2 is mounted on a body of the electric vehicle. The electric vehicle in the embodiment has the same beneficial effects as the battery module in Embodiment 2, which will not be described in detail herein.

The foregoing descriptions are only the preferred embodiments of the present disclosure and are not intended to limit the present disclosure. Any modifications, equivalents, improvements and the like within the spirit and principles of the present disclosure are included within the scope of protection of the present disclosure.

## Claims

1. A prismatic long battery pack, comprising a plurality of batteries (1) stacked together, and a plurality of busbars, wherein
poles of each of the batteries (1) are arranged at two ends, and the poles of each of the batteries (1) on the same side are staggered up and down in a stacking direction of the prismatic long battery pack;
each of the busbars comprises a positive lead-out bar (2) connected to one of the batteries (1), a negative lead-out bar (3) connected to another one of the batteries (1), and a plurality of series-connection bars that are respectively arranged at two sides of the prismatic long battery pack and form series connections among the batteries (1).

2. The prismatic long battery pack according to claim 1, wherein the poles at the two ends of each of the batteries (1) are located at a top or a bottom of the battery (1).

3. The prismatic long battery pack according to claim 1, wherein the series-connection bars comprise bridge-joint bars (4), and each of the bridge-joint bars (4) bridges over an end face of a middle battery (1) to form a series connection between batteries (1) on two sides of the middle battery (1).

4. The prismatic long battery pack according to claim 3, wherein poles of two batteries (1) series-connected by the bridge-joint bar (4) are both located at a top or a bottom of the respective batteries (1).

5. The prismatic long battery pack according to claim 4, wherein the batteries (1) are stacked in an odd number, the positive lead-out bar (2) and the negative lead-out bar (3) are located at the same end of the prismatic long battery pack and are respectively arranged on the two sides of the prismatic long battery pack.

6. The prismatic long battery pack according to claim 5, wherein the series-connection bars also comprise an adjoining bar (5) for series connection of two adjacent batteries (1) at an end part, and both the positive lead-out bar (2) and the negative lead-out bar (3) are located at one end of the prismatic long battery pack opposite to the adjoining bar (5).

7. The prismatic long battery pack according to claim 4, wherein the batteries (1) are stacked in an even number, and the positive lead-out bar (2) and the negative lead-out bar (3) are located at the same end and on the same side of prismatic long battery pack.

8. The prismatic long battery pack according to claim 7, wherein the series-connection bars also comprise an adjoining bar (5) for series connection of two adjacent batteries (1) at an end part, and both the positive lead-out bar (2) and the negative lead-out bar (3) are located at one end of the prismatic long battery pack opposite to the adjoining bar (5).

9. The prismatic long battery pack according to claim 1, wherein each of the batteries (1) has a length of 350mm-1500mm, a width of 140mm-250mm, and a thickness of 17mm-75mm.

10. The prismatic long battery pack according to any one of claims 1-9, wherein deformable energy-absorbing structures (401) are constructed on at least part of the series-connection bars.

11. The prismatic long battery pack according to claim 10, wherein the deformable energy-absorbing structures (401) are bendable portions constructed on the series-connection bars.

12. The prismatic long battery pack according to claim 11, wherein at least two bendable portions are constructed on each of the series-connection bars.

13. A battery module, comprising the prismatic long battery pack of any one of claims 1-12, wherein one prismatic long battery pack is present, or more prismatic long battery packs connected in series are present.

14. An electric vehicle, wherein the battery module of claim 13 is mounted on a body of the electric vehicle.
